(19) Europäisches Patentamt
European Patent Office
Office européen des brevets

(11) **EP 3 549 976 B1**

(12) **EUROPEAN PATENT SPECIFICATION**

(45) Date of publication and mention
of the grant of the patent:
**31.08.2022 Bulletin 2022/35**

(21) Application number: **17878563.0**

(22) Date of filing: **05.12.2017**

(51) International Patent Classification (IPC):
**C08J 9/04** *(2006.01)*     **B65D 81/34** *(2006.01)*
**C08J 9/12** *(2006.01)*     **C08L 67/00** *(2006.01)*

(52) Cooperative Patent Classification (CPC):
**C08J 9/0066; C08J 9/122; G01N 25/4866;**
C08J 2201/03; C08J 2203/06; C08J 2205/044;
C08J 2367/02

(86) International application number:
**PCT/JP2017/043627**

(87) International publication number:
**WO 2018/105606 (14.06.2018 Gazette 2018/24)**

(54) **FOAMED SHEET OF THERMOPLASTIC POLYESTER RESIN AND FOAMED CONTAINER OF THERMOPLASTIC POLYESTER RESIN**

GESCHÄUMTE FOLIE AUS THERMOPLASTISCHEM POLYESTERHARZ UND GESCHÄUMTER BEHÄLTER AUS THERMOPLASTISCHEM POLYESTERHARZ

FEUILLE EN MOUSSE DE RÉSINE DE POLYESTER THERMOPLASTIQUE ET RÉCIPIENT EXPANSÉ DE RÉSINE DE POLYESTER THERMOPLASTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.12.2016 JP 2016235780**
**31.03.2017 JP 2017071103**

(43) Date of publication of application:
**09.10.2019 Bulletin 2019/41**

(73) Proprietor: **Sekisui Plastics Co., Ltd.**
**Osaka-shi, Osaka 530-8565 (JP)**

(72) Inventor: **KATO, Osamu**
**Osaka-shi, Osaka 530-8565 (JP)**

(74) Representative: **Hoffmann Eitle**
**Patent- und Rechtsanwälte PartmbB**
**Arabellastraße 30**
**81925 München (DE)**

(56) References cited:
**WO-A1-2006/106776      JP-A- H0 970 871**
**JP-A- H11 116 722      JP-A- 2000 001 559**
**JP-A- 2000 037 805      JP-A- 2013 227 483**
**JP-A- 2014 028 920      JP-A- 2014 047 228**
**JP-A- 2015 098 587      JP-A- 2016 069 473**
**JP-A- 2016 151 004**

**Description**

TECHNICAL FIELD

The present invention relates to a thermoplastic polyester resin foam sheet and a thermoplastic polyester resin foam container.

BACKGROUND ART

It is generally known that containers formed by molding a thermoplastic polyester resin foam sheet (hereinafter, also simply referred to as a "foam sheet") are excellent in heat resistance. For this reason, such containers are widely used as containers for food to be processed by heating in a microwave oven or a conventional oven.

In order to mold a thermoplastic polyester resin foam sheet into a container, usually, the foam sheet is preheated to a moldable temperature, and the preheated foam sheet is molded with a mold having a predetermined shape.

In this process, when the preheating temperature is higher than the crystallization temperature of the thermoplastic polyester resin, crystallization of the resin on the surface of the foam sheet proceeds before the inside of the foam sheet is sufficiently preheated, which results in poor extension of the foam sheet and is likely to make the resulting container prone to molding defects.

When the preheating temperature is lower than the crystallization temperature of the thermoplastic polyester resin, crystallization of the thermoplastic polyester resin becomes insufficient, and the heat resistance of the resulting container becomes insufficient.

For addressing such problems, Patent Document 1 performs preheating at a temperature that is lower than the crystallization temperature of the thermoplastic polyester resin and is necessary for molding a foam sheet, and performs molding with the foam sheet interposed between mold halves having a temperature higher than the crystallization temperature of the thermoplastic polyester resin, thereby enhancing the heat resistance of the resulting container.

Furthermore, Patent Document 2 is concerned with thermoplastic polyester resin foam particles, obtained by foaming a thermoplastic polyester resin material containing a polyethylene naphthalate and a polyethylene terephthalate. According to an example, the thermoplastic polyester resin material contains talc.

In Patent Documents 3, 4 and 5, thermoplastic polyester-based resin foam sheets are described. According to the examples, the foam sheets may contain talc.

Patent Document 6 describes a foamed laminated sheet, obtained by laminating a polycarbonate resin foamed layer and a polyester resin foamed layer. Both foamed layers satisfy formula: $1.4<(Ta/Tb)<34$ and formula: $0.7\leq(Ta+Tb)\leq7$, wherein Ta is the thickness (mm) of the polycarbonate resin foamed layer and Tb is the thickness (mm) of the polyester resin foamed layer.

Prior Art References

Patent Document

Patent Document 1: Japanese Unexamined Patent Application, First Publication No. Hei 3-239527
Patent Document 2: JP 2015-098587 A
Patent Document 3: JP H11-116722 A
Patent Document 4: JP 2014-047228 A
Patent Document 5: JP 2000-001559 A
Patent Document 6: JP 2000-037805 A

DISCLOSURE OF INVENTION

Problems to be Solved by the Invention

However, in the technique of Patent Document 1, the foam sheet needs to remain interposed between the mold halves for a long time in order to increase the crystallinity of the thermoplastic polyester resin. Therefore, there is a problem that the molding process takes a long time and the productivity of the container cannot be improved.

In this situation, the purpose of the present invention is to provide a thermoplastic polyester resin foam sheet that can be used to produce a container having high heat resistance and improve the productivity of the container.

Means to Solve the Problems

The above-mentioned problem has been solved by the present invention by means of a thermoplastic polyester resin foam sheet and by a thermoplastic polyester resin foam container as detailed in the appended claims.

Effect of the Invention

The thermoplastic polyester resin foam sheet of the present invention enables production of a container with high heat resistance, and can increase the productivity of the container.

BRIEF DESCRIPTION OF THE DRAWINGS

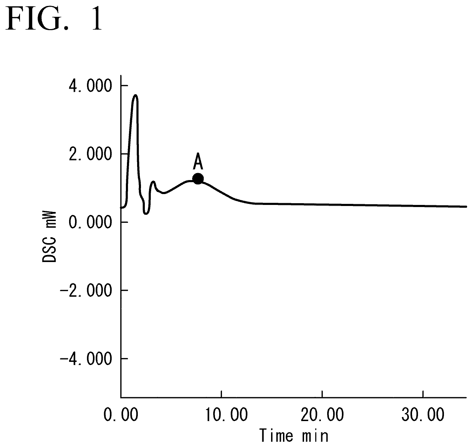

FIG. 1 is an example of a DSC curve obtained by plotting time (minutes) on the abscissa, and plotting amount of heat DSC (mW) on the ordinate.

DESCRIPTION OF THE EMBODIMENTS

(Thermoplastic Polyester Resin Foam Sheet)

The thermoplastic polyester resin foam sheet (hereinafter, also simply referred to as "foam sheet") of the present invention has a foamed resin layer including a thermoplastic polyester resin (hereinafter, also simply referred to as "polyester resin") and a crystallization accelerator. The foamed resin layer is formed of a resin composition containing the polyester resin, the crystallization accelerator and a blowing agent.

The foam sheet may have a single-layer structure formed only of the foamed resin layer, or may have a laminate structure having, for example, a non-foamed resin layer on at least one surface of the foamed resin layer. The non-foamed resin layer preferably contains a resin such as the above-mentioned polyester, a polyolefin or a polystyrene. The laminated structure can further improve the strength of the foam sheet and impart the foam sheet with excellent appearance.

The thickness of the foam sheet is preferably 0.3 to 5.0 mm, more preferably 0.4 to 4.5 mm, and still more preferably 0.5 to 4.0 mm. When the thickness is not less than the above lower limit value, the strength of the thermoplastic polyester resin foam container described later (hereinafter, also referred to simply as a "foam container") can be further enhanced. When the thickness is not more than the above upper limit value, it becomes easy to thoroughly heat the foam sheet to its inside.

The basis weight of the foam sheet is preferably 250 to 900 g/m$^2$, more preferably 250 to 800 g/m$^2$, and still more preferably 300 to 700 g/m$^2$. When the basis weight is not less than the above lower limit value, the strength of the foam container can be further enhanced. When the basis weight is not more than the above upper limit value, the foam container can be more easily formed.

The expansion ratio of the foam sheet is preferably 1.5 to 15 times, more preferably 2 to 10 times, and still more preferably 3 to 8 times. When the expansion ratio is not less than the above lower limit value, the heat insulation ability of the foam container can be further improved. When the expansion ratio is not more than the above upper limit value, it becomes easy to thoroughly heat the foam sheet to its inside.

<Polyester Resin>

Examples of polyester resins include a polyethylene terephthalate resin, a polybutylene terephthalate resin, a polyethylene naphthalate resin, a polyethylene furanoate resin, a polybutylene naphthalate resin, copolymers of terephthalic acid, ethylene glycol and cyclohexane dimethanol, mixtures of any of the above resins, and mixtures of any of the above resins with other resins. Also, plant-derived polyethylene terephthalate resins and a polyethylene furanoate resin may be used. One of these polyester resins may be used alone, or two or more thereof may be used in combination. A particularly preferred polyester resin is a polyethylene terephthalate resin.

When the polyester resin is mixed with other resins, the amount of the other resins is preferably less than 50 % by mass, more preferably more than 0 % by mass and 30 % by mass, and still more preferably more than 0 % by mass and 20 % by mass or less, based on the total mass of the polyester resin.

The weight average molecular weight of the polyester resin is preferably 100,000 to 500,000, more preferably 150,000 to 450,000, and still more preferably 200,000 to 400,000. When the weight average molecular weight of the polyester resin is in the above range, a less brittle foam sheet can be easily obtained. The weight average molecular weight is a value obtained by converting a value measured by gel permeation chromatography (GPC), based on the calibration curve obtained using standards with product names "STANDARD SM-105" and "STANDARD SH-75", manufactured by Showa Denko K.K.

The abundance ratio of molecules having a molecular weight of 10000 or less as determined from a differential molecular weight distribution of the polyester resin present in the foam sheet is 6.0 % by mass or less, preferably 5.5 % by mass or less, and more preferably 5.0 % by mass or less, with respect to total mass of the polyester resin. Further, the abundance ratio is preferably more than 0 % by mass and 6.0 % by mass or less, more preferably more than 0 % by mass and 5.5 % by mass or less, and still more preferably more than 0 % by mass and 5.0 % by mass or less. When the abundance ratio is not more than the above upper limit value, a foam container having excellent resistance to both heat and low temperature brittleness can be easily obtained.

The lower limit value is not particularly limited, but may be more than 0 % by mass, and is substantially 1.0 % by mass or more.

The intrinsic viscosity (IV value) of the polyester resin is preferably 0.50 to 1.50, and more preferably 0.90 to 1.10. When the IV value is not less than the above lower limit value, the foaming is facilitated and an extruded foam sheet can be more easily obtained. When the IV value is not more than the above upper limit value, a smooth sheet can be easily obtained.

The IV value can be measured by the method of JIS K 7367-5 (2000).

<Crystallization Accelerator>

In the present invention, at least one crystallization accelerator selected from an inorganic crystallization accelerator and an organic crystallization accelerator is used.

Examples of inorganic crystallization accelerators include silicates, carbon, and metal oxides. Examples of the silicate include talc which is hydrous magnesium silicate. Examples of the carbon include carbon black, carbon nanofibers, carbon nanotubes, carbon nanohorns, activated carbon, graphite, graphene, coke, mesoporous carbon, glassy carbon, hard carbon, and soft carbon. Specific examples of the carbon black includes furnace black, acetylene black, Ketjen black, and thermal black. Examples of the metal oxides include zinc oxide and titanium oxide.

Examples of the organic crystallization accelerator include aliphatic carboxylic acids, such as stearic acid, montanic acid and salts thereof.

The crystallization accelerator is particulate and preferably contains at least one of talc, carbon black and a metal oxide.

The presence of at least one of talc, carbon black and a metal oxide in the crystallization accelerator facilitates the formation of a foam sheet having excellent resistance to both heat and low temperature brittleness.

As such a crystallization accelerator, talc, carbon black and zinc oxide are preferable. The use of such crystallization accelerators enables production of a highly heat-resistant container, and is likely to further improve the productivity of the container.

With respect to the crystallization accelerator, a single type thereof may be used individually or two or more types thereof may be used in combination.

The average primary particle diameter of particulate crystallization accelerator such as talc or carbon black to be added to the polyester resin is preferably 0.05 to 50 $\mu$m, more preferably 0.05 to 30 $\mu$m, and still more preferably 0.1 to 25 $\mu$m. When the average primary particle diameter of the crystallization accelerator is not less than the above lower limit value, the crystallization accelerator is likely to exhibit the effect of promoting the crystallization. When the average primary particle diameter of the crystallization accelerator is not more than the above upper limit value, the crystallization accelerator can be easily dispersed in the foam sheet.

The average primary particle diameter can be measured by laser diffraction method.

These crystallization accelerators are also present in the foam sheet as aggregates formed by aggregation of a plurality of primary particles. The particle diameter of the crystallization accelerator in the foam sheet in the present invention is defined as follows. That is, when the crystallization accelerator in the foam sheet is present as primary particles, the particle diameter is a major axis of the primary particle. When the crystallization accelerator in the foam sheet is present in the form of aggregates, the particle diameter is a major axis of the aggregate. When the foam sheet contains both primary particles and aggregates, the particle size is a major axis of the largest primary particle or aggregate.

The particle diameter of the crystallization accelerator in the foam sheet in terms of the major axis thereof is 0.05 $\mu$m or more and 50 $\mu$m or less, preferably 0.05 $\mu$m or more and 40 $\mu$m or less, and more preferably 0.05 $\mu$m or more and 25 $\mu$m or less. When the major axis of the crystallization accelerator is not more than the above upper limit value, the crystallinity of the thermoplastic polyester resin is likely to be improved, and a foam container having more excellent heat resistance can be easily obtained.

The particle diameter of the crystallization accelerator in the foam sheet can be measured by means of a scanning electron microscope (SEM) or a transmission electron microscope (TEM). Further, this particle diameter is an arithmetic mean particle diameter as is apparent from the measuring method described below.

The amount of the crystallization accelerator is preferably 0.1 to 5 % by mass, and more preferably 0.5 to 3 % by mass, based on the total mass of the foam sheet. When the amount of the crystallization accelerator is not less than the above lower limit value, a foam container with further improved heat resistance can be easily obtained. When the amount is not more than the above upper limit value, the variation in density and thickness of the foam sheet can be easily suppressed.

<Blowing Agent>

Examples of the blowing agent include saturated aliphatic hydrocarbons such as propane, normal butane, isobutane, normal pentane, isopentane, and hexane; ethers such as dimethyl ether; halogenated hydrocarbons such as methyl chloride, 1,1,1,2-tetrafluoroethane, 1,1-difluoroethane, and monochlorodifluoromethane; carbon dioxide; and nitrogen. Among these, dimethyl ether, propane, normal butane, isobutane, carbon dioxide and nitrogen are preferable. These blowing agents may be used individually or in combination of two or more type of the blowing agents.

The amount of the blowing agent is preferably 0 to 4 parts by mass, and more preferably 0 to 3 parts by mass, with respect to 100 parts by mass of the polyester resin.

<Optional Component>

The foam sheet of the present invention may contain other components (optional components) in addition to the polyester resin, the crystallization accelerator and the blowing agent.

Examples of such optional components include a crosslinking agent, a cell regulator, a surfactant, a colorant, a shrinkage inhibitor, a flame retardant, a lubricant, and an antidegradant.

Examples of the crosslinking agent include acid dianhydrides, such as pyromellitic anhydride, polyfunctional epoxy compounds, oxazoline compounds, and oxazine compounds.

When the optional component is used, the amount thereof is preferably 0.01 to 10 parts by mass, and more preferably 0.05 to 5 parts by mass, with respect to 100 parts by mass of the polyester resin.

With respect to the foam sheet of the present invention, the crystallization time at 110 °C is 14 minutes or less, preferably 12 minutes or less, and more preferably 10 minutes or less.

When the crystallization time at 110 °C is 14 minutes or less, the crystallinity of the polyester resin is improved, thereby enabling production of a foam container excellent in heat resistance. Further, when the crystallization time at 110 °C is 14 minutes or less, the time required for the molding step is shortened, whereby the productivity of the foam container can be enhanced.

The lower limit value is not particularly limited as long as the polyester resin can be crystallized, and is substantially 4 minutes or more.

The crystallization time can be adjusted by adjusting the type or amount of the polyester resin and the type or amount of the crystallization accelerator.

Further, the crystallization time in the present invention means the time measured by the method for measuring crystallization time described below.

(Method for Measuring Crystallization Time)

A sample taken from the thermoplastic polyester resin foam sheet is subjected to a first heating by heating the sample from 30 °C to 290 °C at a heating rate of 100 °C/min using a heat flux differential scanning calorimetry (DSC) apparatus, followed by holding the sample at 290 °C for 10 minutes.

Then, the sample is taken out of the apparatus to allow the sample to stand at 23 °C for 10 minutes, followed by returning the sample back to the inside of the apparatus having a temperature of 30 °C. The resulting sample is subjected to a second heating by heating the sample from 30 °C to 110 °C at a heating rate of 100 °C/min, followed by holding the sample at 110 °C for 30 minutes; and

Thereafter, a crystallization time is determined from a DSC curve obtained in the second heating in terms of a time between initiation of the second heating and a time of emergence of a peak top of a last appearing exothermic peak in the DSC curve.

(Production of Foam Sheet)

The thermoplastic polyester resin foam sheet can be produced by a method including foaming and curing a resin composition containing a polyester resin, a crystallization accelerator and a blowing agent.

As a suitable example of such a method for producing the foam sheet, a known method for producing a foam sheet can be adopted. Specifically, for example, the foam sheet can be produced by the following method.

The polyester resin, the crystallization accelerator, the blowing agent, and the optional components, if necessary, are fed to an extruder and melt-kneaded to form a molten mixture of the resin composition.

In general, polyester resins are resins that are easily hydrolyzed at high temperatures. For this reason, it is preferable to dry the polyester resin in advance. For drying, for example, a dehumidifying dryer is used. As for a drying method, it is sufficient to expose the polyester resin to a heated air obtained by heating air having a dew point of -30 °C to 160 °C.

The amount of the crystallization accelerator is preferably 0.05 parts by mass or more and 5 parts by mass or less, and more preferably 0.1 parts by mass or more and 4 parts by mass or less, and still more preferably 0.5 parts by mass or more and 3 parts by mass or less, with respect to 100 parts by mass of the polyester resin. The use of the crystallization accelerator in an amount of not less than the above lower limit value facilitates the acceleration of crystallization of the polyester resin. The use of the crystallization accelerator in an amount of not more than the above upper limit value allows the foam container to have further improved resistance to low temperature brittleness.

When the resin composition contains a crosslinking agent, the amount of the crosslinking agent is preferably 0.01 to 5 parts by mass, more preferably 0.02 to 4 parts by mass, and still more preferably 0.05 to 3 parts by mass, with respect to 100 parts by mass of the polyester resin. The use of the crosslinking agent in an amount of not less than the above lower limit value allows the foam container to have further improved resistance to low temperature brittleness. The use of the crosslinking agent in an amount of not more than the above upper limit value can suppress the viscosity rise of the molten mixture.

Subsequently, the molten mixture is extrusion-foamed through a circular die attached to the tip of the extruder to obtain a cylindrical foam. The cylindrical foam is expanded in diameter and then supplied to a mandrel for cooling. Then, for example, a foam sheet can be obtained by a method in which the cooled cylindrical foam is continuously cut in the extrusion direction across the inner and outer peripheral surfaces thereof so as to spread out the resulting sheet.

As a method for determining the amount of the crystallization accelerator in the foam sheet, ash content measurement, thermogravimetry/differential thermal analysis (TG/DTA), and fluorescent X-ray measurement may be mentioned.

When the crystallization accelerator is talc, the amount of talc can be determined by measuring the amount of talc in ash (ash measurement).

When the crystallization accelerator is carbon black, the amount of carbon black can be determined by analyzing a foam sheet cut into an arbitrary size with a TG/DTA apparatus.

When the crystallization accelerator is zinc oxide, the mass of zinc oxide can be determined by measuring the mass of metallic zinc by fluorescent X-ray and converting the obtained the mass of metallic zinc into the mass of zinc oxide.

When the crystallization accelerator is an organic crystallization accelerator, the crystallization accelerator is decomposed and dispersed in the foam sheet, or the crystallization accelerator reacts with the polyethylene terephthalate resin, so that the amount of crystallization accelerator cannot be determined.

When two or more crystallization accelerators are used in combination, the respective amounts of the crystallization accelerators can be determined by using the aforementioned determination methods in combination.

Further, in the present specification, the amount of the crystallization accelerator in the foam sheet shall be expressed in terms of parts by mass of the crystallization accelerator with respect to 100 parts by mass of the polyester resin.

When talc is used as the crystallization accelerator, the color of the resulting foam sheet is white, and when carbon black is used as the crystallization accelerator, the color of the resulting foam sheet is gray or black. When an organic crystallization accelerator or zinc oxide is used as the crystallization accelerator, the color of the resulting foam sheet is white.

(Thermoplastic Polyester Resin Foam Container)

The thermoplastic polyester resin foam container (hereinafter, also simply referred to as "foam container") of the present invention is formed by molding the thermoplastic polyester resin foam sheet into a desired shape using a known molding method.

(Crystallinity)

In the foam container of the present invention, the crystallinity calculated by the following formula (1) is preferably 21 % to 30 %, and more preferably 21 % to 27 %.

$$\text{Crystallinity (\%)} = \{(\text{absolute value of heat of fusion (J/g)} - \text{absolute value of}$$

$$\text{heat of crystallization (J/g))/heat of complete crystallization (J/g)}\} \times 100 \qquad (1)$$

When the crystallinity is within the above range, the heat resistance of the foam container can be easily improved.

The heat of fusion and the heat of crystallization can be determined from a DSC curve obtained according to JIS K 7122 (2012) "Method for measuring heat of transition of plastics". The measurement conditions are as follows.

5 to 10 mg of a measurement sample is filled into an aluminum measurement container of a DSC apparatus so as not to leave gaps in the bottom of the container.

Next, the container is purged with nitrogen gas at a flow rate of 20 mL/min at 30 °C for 2 minutes, and the temperature is increased from 30 °C to 290 °C at a rate of 10 °C/min to obtain a DSC curve. In this process, alumina is used as a reference substance.

The crystallinity calculated in the present invention is a value obtained by dividing the difference between the heat of fusion (J/g) obtained from the area of the fusion peak and the heat of crystallization (J/g) obtained from the area of the crystallization peak by the theoretical heat of fusion of perfect crystal of the resin. The heat of fusion and the heat of crystallization can be calculated using analysis software attached to a measurement apparatus.

The heat of complete crystallization means the amount of heat at 100 % crystallization. The heat of complete crystallization of PET is 140.1 J/g.

The crystallinity of the resin foam container can be regulated by the molding conditions of the foam sheet.

The type and the particle diameter of the crystallization accelerator contained in the foam container are the same as the type and the particle diameter of the crystallization accelerator in the foam sheet.

The abundance ratio of molecules having a molecular weight of 10000 or less in the foam container as determined from a differential molecular weight distribution of the polyester resin present in the foam container is the same as the abundance ratio of molecules having a molecular weight of 10000 or less in the foam sheet as determined from a differential molecular weight distribution of the polyester resin present in the foam sheet. The crystallization time of the polyester resin in the foam container is the same as the crystallization time of the polyester resin in the foam sheet.

(Method for Producing Foam Container)

Examples of the method for producing the foam container of the present invention include conventionally known production methods.

For example, the foam container can be produced by a method including a preheating step of preheating the foam sheet, and a subsequent molding step of heat molding the foam sheet interposed between mold halves. Further, after the molding step, a cooling step of cooling the molded foam sheet may be performed.

<Preheating Step>

The preheating step is a step of introducing the foam sheet into a heating tank and preheating the foam sheet to soften the foamed sheet. The temperature of the heating tank is preferably 90 to 180 °C, more preferably 100 to 170 °C, and still more preferably 105 to 160 °C. When the temperature is not less than the above lower limit value, the foam sheet can be more easily shaped. When the temperature is not more than the above upper limit value, the crystallization of the polyester resin can be suppressed.

In this process, it is preferable to set the surface temperature of the foam sheet at 105 to 140 °C, more preferably 110 to 135 °C, and still more preferably 115 to 130 °C. When the surface temperature is not less than the above lower limit value, the foam sheet can be more easily shaped. When the surface temperature is not more than the upper limit value, the crystallization of the polyester resin on the surface of the foam sheet can be suppressed.

The preheating time of the foam sheet in the preheating step is preferably 20 to 90 seconds, more preferably 20 to 85 seconds, and still more preferably 30 to 80 seconds. When the preheating time is not less than the above lower limit value, the foam sheet can be more easily shaped. When the preheating time is not more than the upper limit value, the crystallization of the polyester resin on the surface of the foam sheet can be suppressed.

<Molding Step>

The molding step is a step where the preheated foam sheet is interposed between the mold halves and further heated to form a foam container having a desired shape.

As the molding method, for example, a vacuum molding method and an air-pressure molding method can be mentioned, of which the air-pressure molding method is preferable. Examples of the vacuum molding method and the air-pressure molding method include plug molding, free drawing molding, plug and ridge molding, matched mold molding, straight molding, drape molding, reverse-draw molding, air slip molding, plug assist molding, and plug assist reverse-draw molding.

In the molding step, the temperature of the mold is preferably 130 to 200 °C, more preferably 140 to 195 °C, and still more preferably 160 to 190 °C. When the temperature is not less than the above lower limit value, the crystallinity of the polyester resin can be increased. When the temperature is not more than the above upper limit value, excessive crystallization of the polyester resin can be suppressed.

In the molding step, the heat molding time is preferably 4 to 15 seconds, more preferably 5.0 to 13 seconds, and still more preferably 6.0 to 12 seconds. When the molding time is not less than the above lower limit value, the crystallinity of the polyester resin can be increased. When the molding time is not more than the above upper limit value, the productivity of the foam container can be enhanced.

In the molding step, the absolute value of the heat of crystallization of the polyester resin is preferably 1 to 5 mJ/mg, more preferably 1.2 to 4.8 mJ/mg, and still more preferably 1.5 to 4.5 mJ/mg. When the absolute value of the heat of crystallization is not less than the above lower limit value, the crystallinity of the polyester resin can be increased. When the absolute value of the heat of crystallization is not more than the above upper limit value, excessive crystallization of the polyester resin can be suppressed.

In the air-pressure molding method, it is preferable that male and female mold halves heated to 160 to 200 °C are used as the mold, and the preheated thermoplastic polyester resin foam sheet is tightly contacted with the female mold half for 4 to 15 seconds, while supplying compressed air from the side of the male mold half.

The temperature of the mold in the molding step is preferably higher than the temperature of the heating tank in the preheating step.

<Cooling Step>

The cooling step is a step of cooling the molded foam sheet.

In the cooling step, the molded foam sheet is cooled to have a surface temperature of 50 to 70 °C.

In the cooling step, it is preferable to cool the molded foam sheet so as to lower the surface temperature of the foam sheet to 50 to 70 °C over 50 to 60 seconds. By the cooling, crystallization of the polyester resin proceeds, and the crystallinity of 21 % or more can be achieved.

After the cooling, the molded article is cut out from the foam sheet to obtain a foam container.

The amount of the crystallization accelerator in the foam container can be determined in the same manner as in the case of the foam sheet. Also, the resulting foam container has the same color as that of the foam sheet.

The thermoplastic polyester resin foam container of the present invention may have a non-foamed resin layer on the inner surface. The presence of the non-foamed resin layer improves the strength of the foam container, and makes the foam container resistant to heat deformation.

Further, the foam container may have a structure in which another layer is laminated on the inner surface of the foam container, the another layer being formed by interposing a print layer between two non-foamed resin layers. With such a configuration, the surface of the foam container can be colored and decorated, thereby improving the design of the foam container.

The thermoplastic polyester resin foam container of the present invention can be used as containers such as packaging containers for home appliances, machine parts, and foods. In particular, the thermoplastic polyester resin foam container of the present invention is useful as packaging containers for foods. Especially preferred are those which are heated in a conventional oven or a microwave oven.

Further, the thermoplastic polyester resin foam container of the present invention can be especially preferably used as a microwave-safe container for heating frozen food, such as gratin or lasagna, which are distributed refrigerated or frozen after being baked, and are heated with a microwave oven before eating.

The microwave-safe container for heating frozen food means a container for frozen foods that are cooked by heating with a microwave oven.

Examples

Hereinbelow, the present invention will be described in detail with reference to Examples which, however, should not be construed as limiting the present invention. In the following description, "part" used as a unit for expressing amounts of raw materials shall represent "part by mass" unless otherwise specified.

[Example 1]

(Production of Foam Sheet)

100 parts by mass (hereinafter, referred to simply as 100 "parts" or the like) of a PET resin having an IV value of 1.04 as a main raw material, 1.0 part of fine talc (SG-95, manufactured by Nippon Talc Co., Ltd.) as a crystallization accelerator, and 0.2 parts of pyromellitic anhydride (Daicel pyromellitic anhydride, manufactured by Daicel Corporation) as a crosslinking agent were used. These raw materials were dried in advance by dehumidifying at 100 °C for 4 hours, put into an extruder of φ 90 mm, melt-kneaded, and kneaded while injecting nitrogen gas at a predetermined position. The resulting was extruded from a circular die with a bore diameter of φ 135 mm to be formed into a sheet while being cooled by a mandrel, and wound up.

The thickness of the obtained foam sheet was 0.75 mm, and the basis weight was 330 g/m$^2$.

(Production of Foam Container)

The thermoplastic polyethylene terephthalate resin foam sheet was preheated for 90 seconds in a heating tank at 150 °C to have the surface temperature of the foamed sheet set at 125 °C.

Then, compressed air was supplied from the side of the male mold half to allow the foam sheet to tightly contact with the female mold half, and the male and female mold halves were closed for 6 seconds to perform vacuum pressure molding at 180 °C to obtain a foam container.

[Example 2]

A foam sheet and a foam container were produced in the same manner as in Example 1 except that 1.0 part of general purpose talc (MS-P, manufactured by Nippon Talc Co., Ltd.) was used as the crystallization accelerator.

[Example 3]

A foam sheet and a foam container were produced in the same manner as in Example 1 except that PE-SM-SAE 6100 BLACK-C (manufactured by Dainichiseika Color & Chemicals Mfg. Co., Ltd.) was used as the crystallization accelerator. PE-SM-SAE 6100 BLACK-C is a product into which 30 % by mass of furnace carbon black (hereinafter, also simply referred to as "CB") is kneaded, and was used in an amount of 5 parts (1.5 parts in terms of added amount of CB) in this Example 3.

[Example 4] (For reference, not according to the claimed invention)

A foam sheet and a foam container were produced in the same manner as in Example 1 except that 0.5 part of sodium montanate (hereafter, also simply referred to as "Na montanate") (NS-8, manufactured by Nitto Kasei Kogyo Co., Ltd.) which is an organic crystal nucleating agent was used as the crystallization accelerator. TEM and SEM observations could not determine the aggregate diameter (i.e., particles were dissolved).

[Example 5] (For reference, not according to the claimed invention)

A foam sheet and a foam container were produced in the same manner as in Example 1 except that 100 parts of a PET resin having an IV value of 0.88 were used as a main raw material.

[Example 6] (For reference, not according to the claimed invention)t

A foam sheet and a foam container were produced in the same manner as in Example 1 except that 100 parts of a PET resin having an IV value of 0.88 was used as a main raw material and 1.0 part of high apparent density talc (hereafter, also simply referred to as "high density talc") (MS-KY, manufactured by Nippon Talc Co., Ltd.) was used as the crystallization accelerator.

[Examples 7 to 12]

Foam sheets and foam containers were produced in the same manner as in Example 1 except that the crystallization accelerators shown in Tables 1 and 2 were used in respective amounts (parts by mass) shown in Tables 1 and 2. In the tables, "/" in Examples 8 and 10 means that the general purpose talc and the furnace carbon black were used in combination as the crystallization accelerator.

[Table 1]

| Example/Comparative Example | | | Example 1 | Example 2 | Example 3 | Example 4* | Example 5* | Example 6* | Example 7 | Example 8 |
|---|---|---|---|---|---|---|---|---|---|---|
| Polyester resin | | Type | PET | PET | PET | PET | PET | PET | PET | PET |
| | | Amount [Parts by mass] | 100 | 100 | 100 | 100 | 100 | 100 | 100 | 100 |
| | | IV value | 1.04 | 1.04 | 1.04 | 1.04 | 0.88 | 0.88 | 1.04 | 1.04 |
| Crystallization accelerator | | Inorganic or organic | Inorganic | Inorganic | Inorganic | Organic | Inorganic | Inorganic | Inorganic | Inorganic |
| | | Type | Fine talc | General purpose talc | Furnace CB | Na montanate | General purpose talc | High density talc | General purpose talc | General purpose talc/ Furnace CB |
| | | Amount [Parts by mass] | 1 | 1 | 1.5 | 0.25 | 1 | 1 | 2 | 1/1.5 |
| | | Average primary particle diameter [$\mu$ m] | 2.5 | 15 | 0.1 | - | 15 | 25 | 15 | 15/0.1 |
| Foam sheet | | Particle diameter (long axis) [$\mu$ m] Observation method | 15 SEM | 40 SEM | 0.2 TEM | - Impossible | 40 SEM | 60 SEM | 40 SEM | 40/0.2 SEM/TEM |
| | | Abundance ratio of molecules with Mw of 10000 or less [% by mass] | 4.7 | 4.7 | 5.5 | 7.0 | 6.5 | 6.5 | 5.0 | 5.5 |
| | | Crystallization timed 10°C) [min] | 9 | 11 | 7 | 7 | 11 | 13 | 8 | 7 |
| | Crystallization accelerator | Determination method | Ash content | Ash content | TG/DTA | Fluorescent X-ray | Ash content | Ash content | Ash content | Ash content TG/DTA |
| | | Amount [Parts by mass] | 0.9 | 0.9 | 1.4 | 0.2 | 0.9 | 0.9 | 1.9 | 0.9/1.4 |
| [Table 1] (Continued) | | | | | | | | | | |

(continued)

| Example/Comparative Example | | | Example 1 | Example 2 | Example 3 | Example 4* | Example 5* | Example 6* | Example 7 | Example 8 |
|---|---|---|---|---|---|---|---|---|---|---|
| Foam container | Particle diameter (long axis) [$\mu$ m] Observation method | | 15 SEM | 40 SEM | 0.2 TEM | - Impossible | 40 SEM | 60 SEM | 40 SEM | 40/0.2 SEM/TEM |
| | Abundance ratio of molecules with Mw of 10000 or less [% by mass] | | 4.7 | 4.7 | 5.5 | 7.0 | 6.5 | 6.5 | 5.0 | 5.5 |
| | Crystallization time(110°C) [min] | | 9 | 11 | 7 | 7 | 11 | 13 | 8 | 7 |
| | Crystallization accelerator | Determination method | Ash content | Ash content | TG/DTA | Fluorescent X-ray | Ash content | Ash content | Ash content | Ash content TG/DTA |
| | | Amount [Parts by mass] | 0.9 | 0.9 | 1.4 | 0.2 | 0.9 | 0.9 | 1.9 | 0.9/1.4 |
| | Crystallinity of foam container [%] | | 23 | 22 | 24 | 24 | 23 | 23 | 24 | 24 |
| | Baking test | Dimensional change ratio [%] | 2 | 2.5 | 1.5 | 1.5 | 2.5 | 2.7 | 1.5 | 1.5 |
| | | Evaluation | ◎ | ○ | ★ | ★ | ○ | △ | ★ | ★ |
| | Dynatup impact test | Total energy absorption (23°C)[J] | 1.2 | 1.3 | 1.1 | 0.8 | 0.8 | 0.8 | 1.2 | 1.2 |
| | Freeze drop test | Evaluation of resistance to low temperature brittleness | ◎ | ◎ | ○ | × | × | × | ◎ | ◎ |

*Examples 4, 5 and 6 are for reference and not according to the claimed invention.

[Table 2]

| Example/Comparative Example | | Example 9 | Example 10 | Example 11 | Example 12 | Comparative Example 1 | Comparative Example 2 | Comparative Example 3 |
|---|---|---|---|---|---|---|---|---|
| Polyester resin | Type | PET | PET | PET | PET | PET | PET | PET |
| | Amount [Parts by mass] | 100 | 100 | 100 | 100 | 100 | 100 | 100 |
| | IV value | 1.04 | 1.04 | 1.04 | 1.04 | 1.04 | 1.04 | 1.04 |
| Crystallization accelerator | Inorganic or organic | Inorganic | Inorganic | Inorganic | Inorganic | Inorganic | Inorganic | Inorganic |
| | Type | General purpose talc | General purpose talc/ Furnace CB | Zinc oxide | Zinc oxide | High density talc | Furnace CB | General purpose talc |
| | Amount [Parts by mass] | 3 | 3/3 | 1 | 1 | 1 | 0.3 | 0.1 |
| | Average primary particle diameter [$\mu$m] | 15 | 15/0.1 | 0.6 | 0.3 | 25 | 0.1 | 15 |
| Foam sheet | Particle diameter (long axis) [$\mu$m] Observation method | 40 SEM | 40/0.2 SEM/TEM | 1.2 SEM | 0.7 SEM | 60 SEM | 0.2 TEM | 40 SEM |
| | Abundance ratio of molecules with Mw of 10000 or less [% by mass] | 5.5 | 5.5 | 4.7 | 4.7 | 5.5 | 4.7 | 4.7 |
| | Crystallization time(110°C) [min] | 6 | 7 | 13 | 12 | 16 | 15 | 15 |
| | Crystallization accelerator | Determination method | Ash content | Ash content TG/DTA | Fluorescent X-ray | Fluorescent X-ray | Ash content | TG/DTA | Ash content |
| | | Amount [Parts by mass] | 2.9 | 2.9/2.9 | 0.9 | 0.9 | 0.9 | 0.2 | 0.02 |

[Table 2] (Continued)

| Example/Comparative Example | | | Example 9 | Example 10 | Example 11 | Example 12 | Comparative Example 1 | Comparative Example 2 | Comparative Example 3 |
|---|---|---|---|---|---|---|---|---|---|
| Foam container | Particle diameter (long axis) [$\mu$ m] Observation method | | 40 SEM | 60/1 SEM/TEM | 1.2 SEM | 0.7 SEM | 60 SEM | 0.2 SEM | 40 SEM |
| | Abundance ratio of molecules with Mw of 10000 or less [% by mass] | | 5.5 | 5.5 | 4.7 | 4.7 | 5.5 | 4.7 | 4.7 |
| | Crystallization time(110°C) [min] | | 6 | 7 | 13 | 12 | 16 | 15 | 15 |
| | Crystallization accelerator | Determination method | Ash content | Ash content TG/DTA | Fluorescent X-ray | Fluorescent X-ray | Ash content | TG/DTA | Ash content |
| | | Amount [Parts by mass] | 2.9 | 2.9/2.9 | 0.9 | 0.9 | 0.9 | 0.2 | 0.02 |
| | Crystallinity of foam container [%] | | 24.5 | 24 | 23 | 22.5 | 20 | 20 | 20 |
| | Baking test | Dimensional change ratio [%] | 1.2 | 1 | 2.7 | 2.6 | 3 | 3 | 3 |
| | | Evaluation | ★ | ★ | △ | ○ | × | × | × |
| | Dynatup impact test | Total energy absorption (23°C)[J] | 1.3 | 0.8 | 1.3 | 1.3 | 1.3 | 1.3 | 1.3 |
| | Freeze drop test | Evaluation of resistance to low temperature brittleness | ◎ | × | ◎ | ◎ | ◎ | ◎ | ◎ |

EP 3 549 976 B1

[Comparative Example 1]

A foam sheet and a foam container were produced in the same manner as in Example 1 except that 1.0 part of high apparent density talc (MS-KY, manufactured by Nippon Talc Co., Ltd.) was used as the crystallization accelerator.

[Comparative Example 2]

A foam sheet and a foam container were produced in the same manner as in Example 1 except that PE-SM-SAE 6100 BLACK-C (manufactured by Dainichiseika Color & Chemicals Mfg. Co., Ltd.) was used in an amount of 1 part (0.3 parts in terms of added amount of CB) as the crystallization accelerator. PE-SM-SAE 6100 BLACK-C is a product into which 30 % by mass of furnace carbon black is kneaded.

[Comparative Example 3]

A foam sheet and a foam container were produced in the same manner as in Example 1 except that 0.1 part of general purpose talc (MS-P, manufactured by Nippon Talc Co., Ltd.) was used as the crystallization accelerator.
Various measurements and evaluations were performed with respect to the produced foam sheets and foam containers, the results of which are shown in Table 1 and Table2.

[Measurement of Particle Diameter of Crystallization Accelerator in Foam Sheet]

(SEM Observation)

SEM observation was performed on Examples 1, 2, 5 and 6, and Comparative Examples 1 and 3, in each of which talc was used as the crystallization accelerator.
A sample was cut out using a razor, and the sample was mounted on a carbon tape attached to a sample stand. The sample was photographed under low vacuum (60 Pa) using a backscattered electron detector of "S-3400N" scanning electron microscope manufactured by Hitachi High-Technologies Corporation.
The photograph was taken with 1000x magnification.

(TEM Observation)

TEM observation was performed on Example 3 and Comparative Example 2, in each of which furnace carbon black was used as the crystallization accelerator. Apiece of the foam sheet was cut out using a cutter knife and used as a measurement sample. After fixing the cut-out sample on a cryo-sample base with an adhesive, an ultra-thin section (thickness 90 nm) was prepared using an ultramicrotome (manufactured by Leica Microsystems) and a frozen section preparation system (manufactured by Leica Microsystems).
Next, the ultra-thin section was photographed with 20,000x magnification using a TEM (H-7600, manufactured by Hitachi High-Technologies Corporation).
In Example 4 in which the crystallization accelerator was not particulate, the particle diameter could not be measured.

(Measurement of Particle Diameter)

A total of 20 primary particles and aggregates were taken per sample for each of TEM observation and SEM observation, and the major axis of each sample was measured. Then, an average value of the measured major axis values was calculated. The results are shown in Table 1.

[Measurement of Particle Diameter of Crystallization Accelerator in Foam Container]

SEM observation, TEM observation, and particle diameter measurement were performed in the same manner as in the case of the foam sheet, except that the bottom of the foam container was cut out using a cutter knife to prepare a measurement sample.

[Measurement of Abundance Ratio of Molecules with Molecular Weight of 10000 or less]

A sample was prepared by the following sample preparation method, and the molecular weight was measured using the following measuring apparatus under the following measurement conditions. From the results of the measurement, the ratio of an area corresponding to molecules having a molecular weight of 10000 or less relative to 100 % of the area of the obtained differential molecular weight distribution curve, which corresponds to 100 % by mass (total mass of all molecules), was determined as the abundance ratio (% by mass) of the molecules having a molecular weight of 10000 or less. Further, with respect to the area ratio (% by mass) of the molecule having a molecular weight of 10000 or less, the area of a portion of a molecular weight of 10000 in the integrated molecular weight distribution (ordinate: area, abscissa: Log $10_{10}$M, wherein M = molecular weight) obtained by analyzing the differential molecular weight distribution was defined as the abundance ratio (% by mass) of the molecules having a molecular weight of 10000 or less.

(Sample Preparation Method)

5 mg of the obtained foam sheet was weighed and used as a sample. 0.5 mL of HFIP and 0.5 mL of chloroform were sequentially added to this sample, and the resulting was shaken gently and allowed to stand for 5 hours. After confirming the dissolution, the resulting reaction solution was diluted by adding chloroform until the total volume reached 10 mL, shaken gently, and filtered with a non-aqueous 0.45 $\mu$m syringe filter (manufactured by Shimadzu GLC Ltd.) before measurement.

> Immersion time: 24.0 $\pm$ 2.0 hr (complete dissolution)
> Comparative sample: SRM 706a and MS-311, TR-8580

(Measurement Apparatus)

> GPC apparatus: HLC-8320GPC with built-in RI detector and UV detector (manufactured by Tosoh Corporation)
> Guard column: TOSOH TSK Guard column Hxl-H (6.0 mm I.D. $\times$ 4 cm) $\times$ 1 column
> Column (reference): TOSOH TSKgel SuperH-RC (6.0 mm I.D. x 15 cm) x 2 columns
> Column (sample): TOSOH TSKgel GMHxl (7.8 mm I.D. $\times$ 30 cm) x 2 columns

(Measurement Conditions)

> Column temperature: 40 °C
> Detector temperature: 40 °C
> Pump inlet temperature: 40 °C
> Solvent: chloroform
> Flow rate (reference): 0.5 mL/min.
> Flow rate (sample): 1.0 mL/min.
> Implementation time: 26 min.
> Data collection time: 10 to 25 min.
> Data interval: 500 msec.
> Injection volume: 15 $\mu$L (sample and TR-8580)/50 $\mu$L (Shodex A · B, SRM 706a, MS-311).
> Detector: UV = 254 nm.

[Measurement of Crystallization Time of Foam Sheet at 110 °C]

A sample was taken from the obtained foam sheet, and DSC measurement was performed using the following measuring apparatus under the following measurement conditions. A crystallization time was determined from a DSC curve obtained in the second heating in terms of a time between initiation of the second heating and a time of emergence of a peak top of a last appearing exothermic peak in the DSC curve.

(Measurement Apparatus)

DSC apparatus: Differential scanning calorimeter DSC7000X (manufactured by Hitachi High-Tech Science Corporation)

(Measurement Conditions)

Sample amount: 5.5 ± 0.5 mg
Reference (alumina) amount: 5 mg
Nitrogen gas flow rate: 20 mL/min
Number of test: 2

First heating: Increase the temperature from 30 °C to 290 °C at a heating rate of 100 °C/min, and keep the temperature at 290 °C for 10 minutes.

- Set value of initial heating temperature: 30 °C
- Set value of final heating temperature: 290 °C
- Set value of heating rate: 100 °C/min
- Set value of time for holding final heating temperature: 10 minutes.

Cooling method: Take the sample out from the inside of the measuring apparatus, allow the sample to stand at 23 °C for 10 minutes, and return the sample back into the measuring apparatus having a temperature of 30 °C.
Second heating: Increase the temperature from 30 °C to 110 °C at a heating rate of 100 °C/min, and keep the temperature at 110 °C for 30 minutes.

- Set value of initial heating temperature: 30 °C
- Set value of final heating temperature: 110 °C
- Set value of heating rate: 100 °C/min
- Set value of time for holding final heating temperature: 30 minutes.

(Preparation of DSC Curve)

From the initiation of the second heating until the end of the time for holding the final heating temperature, the amount of heat DSC was read every 0.2 seconds, and a DSC curve (FIG. 1) was prepared by plotting the time (minutes) on the abscissa and plotting the amount of heat DSC (mW) on the ordinate.

(Method for Determination of Peak Top of Last Appearing Exothermic Peak)

In the DSC curve (FIG. 1), point A in FIG. 1 is taken as the peak top of a last appearing exothermic peak.

[Measurement of Crystallization Time of Foam Container at 110 °C]

DSC measurement was performed in the same manner as in the case of the foam sheet except that a sample was taken from the bottom of the obtained foam container, and the crystallization time was determined.

[Method for Determining Amount of Crystallization Accelerator in Foam Sheet]

<Method for Identification of Talc>

A sample was taken from the bottom of the obtained foam sheet, and ashed using the measurement apparatus described below, followed by carrying out the identification of talc with the measurement apparatus under the measurement conditions described below.

(Measurement Apparatus)

- Microwave muffle furnace: Phoenix (manufactured by CEM Corporation)

(Ashing Method)

- A 1.0 g of a sample was placed in the above apparatus and ashed for 30 minutes under the following conditions.

Ashing conditions: dwell time = 30 min, and operating temperature = 800 °C

(Identification Method)

(Measurement Apparatus)

- Fourier transform infrared spectrophotometer, Nicolet iS10 (manufactured by Thermo Scientific)
- Single reflection horizontal ATR (manufactured by Thermo), Smart-iTR (crystal = diamond with ZnSe lens, angle = 42 °)

(Measurement Method)

- The ashed sample was subjected, as it was, to IR measurement using by single reflection ATR method (i.e., micro surface analysis method). Mass species were estimated from the obtained difference spectrum chart.

<Measurement of Ash Content>

A sample was taken from the bottom of the foam sheet, about which the ashed component had been identified as talc, and the ash content was measured using the following measurement apparatus under the following measurement conditions to determine the amount of talc.

(Measurement Apparatus)

- Microwave muffle furnace: Phoenix (manufactured by CEM Corporation)
- Electronic analytical balance, GR-200 (manufactured by A&D Company, Ltd.)

(Ashing Method)

- A container containing 1.0 g of the sample was placed in the above apparatus, and ashed for 30 minutes under the following conditions.

Ashing conditions: dwell time = 30 min, and operating temperature = 800 °C

(Calculation Method)

$$\text{Ash content (\% by mass)} = \{(\text{weight of container after ashing}) - (\text{weight of container}$$

$$\text{only})\} / \{\text{sample (weight of foam sheet} = 1.0 \text{ g})\} \times 100$$

(Unit Conversion)

$$\text{Ash content (parts by mass)} = \text{ash content (\% by mass)} / \{100 \ (\% \text{ by mass of foam sheet})$$

$$- \text{ash content (\% by mass)}\} \times 100$$

<Thermogravimetry/Differential Thermal Analysis (TG/DTA)>

A sample was collected from the bottom of the obtained foam sheet, and the amount of carbon black in the foam sheet was determined using the following measuring apparatus under the following measurement conditions.

(Measurement Apparatus)

- Thermogravimetry and Differential Thermal Analyzer, TG/DTA 6200 (manufactured by SII Nano Technology Inc.)

(Measurement Method)

The aforementioned sample was allowed to stand in a thermostatic chamber at 120 °C for 2 hours to remove the blowing agent and the organic solvent contained in the resin, to thereby obtain a measurement sample. In the case of a foam sheet or a foam molded container containing a blowing agent and an organic solvent in the resin, the blowing agent and the organic solvent in the resin were removed by allowing the sheet or the container for 2 hours in a thermostatic chamber at 120 °C to prepare a measurement sample.

About 15 mg of the sample was filled into a platinum measuring container so as not to leave gaps in the bottom of the container, and the measurement was performed with alumina as a reference substance. As temperature conditions, the temperature was raised from 30 °C to 520 °C at a rate of 10 °C/min with a nitrogen gas flow rate of 230 mL/min, and then the temperature was raised from 520 °C to 800 °C at a rate of 10 °C/min with an air flow rate of 160 mL/min. A TG curve (ordinate: TG (%), abscissa: temperature (°C)) was obtained, based on which the weight loss of the sample weight during the temperature rise of from 520 °C to 800 °C was calculated to determine the amount of carbon black (% by mass).

(Unit Conversion)

$$\text{Amount of carbon black (parts by mass)} = \text{amount of carbon black (\% by mass)}/\{100 \ (\%$$

$$\text{by mass of foam sheet)} - \text{amount of carbon black (\% by mass)}\} \times 100$$

<Fluorescent X-ray Measurement>

A sample was taken from the bottom of the obtained foam sheet. Using the obtained sample, the amount of zinc oxide in the foam sheet was determined by measuring the mass of metallic zinc with the measurement apparatus described below under the measurement conditions described below, and converting the obtained mass of metallic zinc into the mass of zinc oxide.

(Measurement Apparatus)

- Apparatus: X-ray fluorescence spectrometer RIX-2100, manufactured by Rigaku Corporation
- X-ray tube: vertical Rh = 3 kw

(Measurement Conditions)

- Slit width: Standard
- Analyzing crystal: TAP (F to Mg), PET (AL, Si), LiF (K to U), F-PC (F to Ca), SC (Ti to U)
- Measurement mode: FP thin film method (Zn-PET)
- Balance measurement: Done (polyethylene terephthalate)

(Measurement Method)

- A sample was cut into 3 cm pieces from the obtained foam sheet, and weighed, followed by converting the obtained value to basis weight. Then, the sample was attached to a carbon pedestal with a carbon double-sided tape, and calculation was performed by order analysis with polyethylene terephthalate as a balance component.

(Conversion Formula)

- Recalculation was performed with a computer with polyethylene terephthalate as a balance component such that the total became 100 % by mass, and the % by mass of metal alone was calculated.
- The obtained % by mass of the metal was converted to a value as a metal oxide by the following formula.

$$\text{Metal oxide (\% by mass)} = [(\text{\% by mass of metal alone}) \times \{\text{atomic weight of metal (g/mol)} +16 \text{ (atomic weight of oxygen (g/mol)}\}] / \text{atomic weight of metal (g/mol)}$$

Moreover, in the case of the crystallization accelerator of an organic acid salt type, conversion was performed by the following formula.

$$\text{Organic acid salt (\% by mass)} = [(\text{\% by mass of metal alone}) \times \{\text{atomic weight of metal (g/mol)} + \text{molecular weight of organic acid (g/mol)} -1 \text{ (atomic weight of hydrogen)}\}/\text{atomic weight of metal (g/mol)}$$

(Unit Conversion)

$$\text{Amount of metal oxide or organic acid salt (parts by mass)} = \{\text{amount of metal oxide or organic acid salt (\% by mass)}\}/[100 \text{ (\% by mass of foam sheet)} - \{\text{amount of metal oxide or organic acid salt amount (\% by mass)}\}] \times 100$$

[Method for Determining Amount of Crystallization Accelerator in Foam Container]

The amount of the crystallization accelerator in the foam container was determined in the same manner as in the case of the foam sheet except that a sample was taken from the bottom of the obtained foam container.

[Measurement of Heat of Crystallization of Foam Sheet or Foam Container]

A sample was taken from the bottom of the obtained foam sheet or foam container, and DSC measurement was performed according to JIS K 7122 using the following measuring apparatus under the following measurement conditions to determine the heat of crystallization.

(Measurement Apparatus)

DSC apparatus: Differential scanning calorimeter DSC7000X (manufactured by Hitachi High-Tech Science Corporation)

(Measurement Conditions)

Sample amount: 5.5 ± 0.5 mg
Reference (alumina) amount: 5 mg
Nitrogen gas flow rate: 20 mL/min
Number of test: 2

[Calculation of Crystallinity of Foam Container]

The crystallinity was calculated by the following formula (1) from the heat of fusion and the amount of heat of crystallization which were obtained from the DSC curve obtained in the section [Measurement of Heat of Crystallization of Foam Sheet or Foam Container] .

$$\text{Crystallinity (\%)} = \{(\text{absolute value of heat of fusion (J/g)} - \text{absolute value of heat of crystallization (J/g)})/\text{heat of complete crystallization (J/g)}\} \times 100 \qquad (1)$$

[Baking Test]

The lengths of the long side and the short side of the obtained foam container were measured with a caliper, and then the foam container was baked by heating in an oven at 200 °C for 10 minutes. Thereafter, the container was taken out from the oven, the lengths of the long side and the short side were measured again, and the dimensional change before and after heating was calculated by the following formulae (2a) and (2b). The average value of the dimensional changes of the long side and the short side was calculated by the following formula (3) to determine the dimensional change ratio [%] after baking, and the results were evaluated according to the following evaluation

$$\text{Dimensional change of long side [\%]} = \{(\text{length of long side after heating}) - (\text{length of long side before heating})\} / (\text{length of long side before heating}) \times 100 \qquad (2a)$$

$$\text{Dimensional change of short side [\%]} = \{(\text{length of short side after heating}) - (\text{length of short side before heating})\} / (\text{length of short side before heating}) \times 100 \qquad (2b)$$

$$\text{Dimensional change ratio after baking [\%]} = \{(\text{absolute value of dimensional change of long side}) + (\text{absolute value of dimensional change of short side})\}/2 \qquad (3)$$

(Evaluation Criteria)

★: Dimensional change ratio of less than 2.0%
◎: Dimensional change ratio of 2.0 % or more and less than 2.5 %
○: Dimension change ratio of 2.5 % or more and less than 2.7 %
△: Dimensional change ratio of 2.7 % or more and less than 3.0%
×: Dimensional change ratio of 3.0% or more

[Dynatup Impact Test]

Evaluation was performed in accordance with ASTM D-3763 "Standard Test Method for High Speed Puncture Properties of Plastics Using Load and Displacement Sensors". The test conditions etc. were as follows.

As for the test pieces, a foam sheet was cut in the width direction into 5 square pieces each having a size of 10 cm × 10 cm, followed by aging in an environment of 23 °C for 16 hours. The total energy absorption was 1.0 J or more, and excellent impact resistance was achieved.

(Test Conditions etc.)

Testing apparatus: Dynatup impact tester GRC 8250 (manufactured by General Research Corp.)
Test specimen: 100 × 100 × original thickness (mm)
Span: Round hole inner diameter 76 mm
Test speed: 1.52 m/s
Test temperature: 23 °C
Falling height (stopper position): 56 cm
Weight falling distance: 12 cm
Test load: 3.17 kg
Number of test: 5

The integrated value of the graph obtained after the measurement was calculated by the automatic calculation function of the apparatus.

[Freeze drop test]

The obtained foam container was filled with 250 mL of water and frozen in an environment of -20 °C for 16 hours to prepare a test specimen. The test specimen was dropped from a height of 70 cm, and the breakage condition of the foam container was visually observed and evaluated as follows. ◎ or ○ indicates that the foam container has excellent resistance to low temperature brittleness.

◎: The foam container is not cracked.
○: The foam container is cracked but fine fragments are not scattered.
X: The foam container is cracked and fine fragments are scattered.

From the results shown in Tables 1 and 2, in all of Examples 1 to 12 to which the present invention was applied, the dimensional change ratio after baking was less than 3 %, indicating high heat resistance.

Further, in all of Examples 1 to 12 to which the present invention was applied, the crystallization time at 110 °C was 14 minutes or less, indicating that the time required for the molding step can be shortened and the productivity of the foam container can be enhanced.

Furthermore, in all of Examples 1 to 12 to which the present invention was applied, the value of total energy absorption in the Dynatup impact test was 0.8 [J] or more, indicating excellent resistance to low temperature brittleness.

On the other hand, in Comparative Examples 1 to 3 in which the crystallization time at 110 °C was more than 14 minutes, the dimensional change ratio after baking was 3 %, and no improvement in heat resistance was observed.

The above results revealed that the thermoplastic polyester resin foam sheet of the present invention enables production of a container with high heat resistance, and can increase the productivity of the container.

DESCRIPTION OF THE REFERENCE SIGNS

A    Peak top of a last appearing exothermic peak

**Claims**

1. A thermoplastic polyester resin foam sheet comprising:

   a thermoplastic polyester resin; and
   at least one crystallization accelerator selected from a group of an inorganic crystallization accelerator and an organic crystallization accelerator,
   wherein the crystallization accelerator is particulate,
   a major axis of the crystallization accelerator in the thermoplastic polyester resin foam sheet is 0.05 $\mu$m or more and 50 $\mu$m or less, wherein the major axis of the crystallization accelerator is determined by SEM Observation or TEM Observation as described in the section "[Measurement of Particle Diameter of Crystallization Accelerator in Foam Sheet]" of the present description,
   an abundance ratio of molecules having a molecular weight of 10000 or less as determined from a differential molecular weight distribution of the thermoplastic polyester resin is 6.0% by mass or less, based on a total mass of the thermoplastic polyester resin, the molecular weight being determined according to the method described in the description, and
   the thermoplastic polyester resin foam sheet has a crystallization time of 14 minutes or less, as measured by a method comprising:

   subjecting a sample taken from the thermoplastic polyester resin foam sheet to a first heating by heating the sample from 30 °C to 290 °C at a heating rate of 100 °C/min using a heat flux differential scanning calorimetry (DSC) apparatus, followed by holding the sample at 290 °C for 10 minutes;
   taking out the sample out of the apparatus to allow the sample to stand at 23 °C for 10 minutes, followed by returning the sample back to the inside of the apparatus having a temperature of 30 °C;
   subjecting the resulting sample to a second heating by heating the sample from 30 °C to 110 °C at a heating rate of 100 °C/min, followed by holding the sample at 110 °C for 30 minutes; and
   determining a crystallization time from a DSC curve obtained in the second heating in terms of a time between initiation of the second heating and a time of emergence of a peak top of a last appearing exothermic peak in the DSC curve.

2. The thermoplastic polyester resin foam sheet according to claim 1, wherein the crystallization accelerator comprises at least one of talc, carbon black and metal oxides.

3. The thermoplastic polyester resin foam sheet according to claim 1 or 2, wherein the amount of the crystallization accelerator is 0.05 parts by mass or more and 5 parts by mass or less with respect to 100 parts by mass of the thermoplastic polyester resin.

4. Use of the thermoplastic polyester resin foam sheet according to any one of claims 1 to 3 for producing food packaging containers.

5. A thermoplastic polyester resin foam container comprising:

   a thermoplastic polyester resin; and
   at least one crystallization accelerator selected from a group of an inorganic crystallization accelerator and an organic crystallization accelerator,
   wherein the crystallization accelerator is particulate,
   a major axis of the crystallization accelerator in the thermoplastic polyester resin foam sheet is 0.05 $\mu$m or more and 50 $\mu$m or less,
   an abundance ratio of molecules having a molecular weight of 10000 or less as determined from a differential molecular weight distribution of the thermoplastic polyester resin is 6.0 % by mass or less, based on a total mass of the thermoplastic polyester resin, the molecular weight being determined according to the method described in the description, and
the thermoplastic polyester resin foam container has a crystallization time of 14 minutes or less, as measured by a method comprising:

subjecting a sample taken from the thermoplastic polyester resin foam container to a first heating by heating the sample from 30 °C to 290 °C at a heating rate of 100 °C/min using a heat flux differential scanning calorimetry (DSC) apparatus, followed by holding the sample at 290 °C for 10 minutes;
taking the sample out of the apparatus to allow the sample to stand at 23 °C for 10 minutes, followed by returning the sample back to the inside of the apparatus having a temperature of 30 °C;
subjecting the resulting sample to a second heating by heating the sample from 30 °C to 110 °C at a heating rate of 100 °C/min, followed by holding the sample at 110 °C for 30 minutes; and
determining a crystallization time from a DSC curve obtained in the second heating in terms of a time between initiation of the second heating and a time of emergence of a peak top of a last appearing exothermic peak in the DSC curve.

6. The thermoplastic polyester resin foam container according to claim 5, wherein the crystallization accelerator comprises at least one of talc, carbon black and metal oxides.

7. The thermoplastic polyester resin foam container according to claim 5 or 6, wherein an amount of the crystallization accelerator is 0.05 parts by mass or more and 5 parts by mass or less with respect to 100 parts by mass of the thermoplastic polyester resin.

8. The thermoplastic polyester resin foam container according to any one of claims 5 to 7, which is a food packaging container.

9. The thermoplastic polyester resin foam container according to claim 8, which is a microwave-safe container for heating frozen food.


**Patentansprüche**

1. Thermoplastisches Polyesterharzschaumsheet, umfassend:

ein thermoplastisches Polyesterharz; und
mindestens einen Kristallisationsbeschleuniger, ausgewählt aus einer Gruppe von einem anorganischen Kristallisationsbeschleuniger und einem organischen Kristallisationsbeschleuniger,
wobei der Kristallisationsbeschleuniger partikelförmig ist,
eine Hauptachse des Kristallisationsbeschleunigers in dem thermoplastischen Polyesterharzschaumsheet 0,05 μm oder mehr und 50 μm oder weniger beträgt, wobei die Hauptachse des Kristallisationsbeschleunigers durch REM-Messung oder TEM-Messung bestimmt wird, wie im Abschnitt "[Measurement of Particle Diameter of Crystallization Accelerator in Foam Sheet]" der vorliegenden Beschreibung beschrieben,
ein Häufigkeitsverhältnis von Molekülen mit einem Molekulargewicht von 10000 oder weniger, wie aus einer differentiellen Molekulargewichtsverteilung des thermoplastischen Polyesterharzes bestimmt, 6,0 Massen-% oder weniger, bezogen auf eine Gesamtmasse des thermoplastischen Polyesterharzes, beträgt, wobei das Molekulargewicht gemäß dem in der Beschreibung beschriebenen Verfahren bestimmt wird, und
das thermoplastische Polyesterharzschaumsheet eine Kristallisationszeit von 14 Minuten oder weniger aufweist, wie durch ein Verfahren gemessen, das umfasst:

das erste Erhitzen einer aus dem thermoplastischen Polyesterharzschaumsheet entnommenen Probe durch Erhitzen der Probe von 30°C auf 290°C mit einer Erhitzungsrate von 100°C/min unter Verwendung eines Wärmefluss-Dynamische-Differenzkolorimetrie (DSC)-Geräts, gefolgt von dem Halten der Probe bei 290°C für 10 Minuten;
das Entnehmen der Probe aus dem Gerät, um die Probe für 10 Minuten bei 23°C zu stehen zu lassen, gefolgt von dem Rückführen der Probe in das Innere des Geräts mit einer Temperatur von 30°C;
das zweite Erhitzen der resultierenden Probe durch Erhitzen der Probe von 30°C auf 110°C mit einer Erhitzungsrate von 100°C/min, gefolgt von dem Halten der Probe bei 110°C für 30 Minuten; und
das Bestimmen einer Kristallisationszeit aus einer DSC-Kurve, erhalten bei dem zweiten Erhitzen, als Zeit zwischen dem Beginn des zweiten Erhitzens und dem Zeitpunkt des Auftretens einer Peakspitze eines als letztes auftretenden exothermen Peaks in der DSC-Kurve.

2. Thermoplastisches Polyesterharzschaumsheet gemäß Anspruch 1, wobei der Kristallisationsbeschleuniger mindestens eines von Talkum, Ruß und Metalloxiden umfasst.

3. Thermoplastisches Polyesterharzschaumsheet gemäß Anspruch 1 oder 2, wobei die Menge des Kristallisationsbeschleunigers 0,05 Masseteile oder mehr und 5 Masseteile oder weniger, bezogen auf 100 Masseteile des thermoplastischen Polyesterharzes, beträgt.

4. Verwendung des thermoplastischen Polyesterharzschaumsheets gemäß einem der Ansprüche 1 bis 3 zur Herstellung von Verpackungsbehältern für Lebensmittel.

5. Thermoplastischer Polyesterharzschaumbehälter, umfassend:

ein thermoplastisches Polyesterharz; und
mindestens einen Kristallisationsbeschleuniger, ausgewählt aus einer Gruppe von einem anorganischen Kristallisationsbeschleuniger und einem organischen Kristallisationsbeschleuniger,
wobei der Kristallisationsbeschleuniger partikelförmig ist,
eine Hauptachse des Kristallisationsbeschleunigers in dem thermoplastischen Polyesterharzschaumsheet 0,05 $\mu$m oder mehr und 50 $\mu$m oder weniger beträgt,
ein Häufigkeitsverhältnis von Molekülen mit einem Molekulargewicht von 10000 oder weniger, wie aus einer differentiellen Molekulargewichtsverteilung des thermoplastischen Polyesterharzes bestimmt, 6,0 Massen-% oder weniger, bezogen auf eine Gesamtmasse des thermoplastischen Polyesterharzes, beträgt, wobei das Molekulargewicht gemäß dem in der Beschreibung beschriebenen Verfahren bestimmt wird, und
der thermoplastische Polyesterharzschaumbehälter eine Kristallisationszeit von 14 Minuten oder weniger aufweist, wie durch ein Verfahren gemessen, das umfasst:

das erste Erhitzen einer aus dem thermoplastischen Polyesterharzschaumbehälter entnommenen Probe durch Erhitzen der Probe von 30°C auf 290°C mit einer Erhitzungsrate von 100°C/min unter Verwendung eines Wärmefluss-Dynamische-Differenzkolorimetrie (DSC)-Geräts, gefolgt von dem Halten der Probe bei 290°C für 10 Minuten;
das Entnehmen der Probe aus dem Gerät, um die Probe für 10 Minuten bei 23°C zu stehen zu lassen, gefolgt von dem Rückführen der Probe in das Innere des Geräts mit einer Temperatur von 30°C;
das zweite Erhitzen der resultierenden Probe durch Erhitzen der Probe von 30°C auf 110°C mit einer Erhitzungsrate von 100°C/min, gefolgt von dem Halten der Probe bei 110°C für 30 Minuten; und
das Bestimmen einer Kristallisationszeit aus einer DSC-Kurve, erhalten bei dem zweiten Erhitzen, als Zeit zwischen dem Beginn des zweiten Erhitzens und dem Zeitpunkt des Auftretens einer Peakspitze eines als letztes auftretenden exothermen Peaks in der DSC-Kurve.

6. Thermoplastischer Polyesterharzschaumbehälter gemäß Anspruch 5, wobei der Kristallisationsbeschleuniger mindestens eines von Talkum, Ruß und Metalloxiden umfasst.

7. Thermoplastischer Polyesterharzschaumstoffbehälter gemäß Anspruch 5 oder 6, wobei eine Menge des Kristallisationsbeschleunigers 0,05 Masseteile oder mehr und 5 Masseteile oder weniger, bezogen auf 100 Masseteile des thermoplastischen Polyesterharzes, beträgt.

8. Thermoplastischer Polyesterharzschaumbehälter gemäß einem der Ansprüche 5 bis 7, der ein Verpackungsbehälter für Lebensmittel ist.

9. Thermoplastischer Polyesterharzschaumbehälter gemäß Anspruch 8, der ein mikrowellengeeigneter Behälter zum Erwärmen von gefrorenen Lebensmitteln ist.

**Revendications**

1. Feuille de mousse de résine de polyester thermoplastique comprenant :

une résine de polyester thermoplastique ; et

au moins un accélérateur de cristallisation sélectionné parmi un accélérateur inorganique de cristallisation et un accélérateur organique de cristallisation,

dans laquelle l'accélérateur de cristallisation est particulaire,

un axe principal de l'accélérateur de cristallisation dans la feuille de mousse de résine de polyester thermoplastique est de 0,05 $\mu$m ou plus et de 50 $\mu$m ou moins, dans laquelle l'axe principal de l'accélérateur de cristallisation est déterminé par observation au MEB ou observation MET comme décrit dans la section "[Mesure du Diamètre de Particule d'un Accélérateur de Cristallisation dans une Feuille de Mousse]" de la présente description,

un rapport d'abondance de molécules présentant un poids moléculaire de 10 000 ou moins tel que déterminé à partir d'une répartition de poids moléculaire différentielle de la résine de polyester thermoplastique est de 6,0% en masse ou moins, sur la base d'une masse totale de la résine de polyester thermoplastique, le poids moléculaire étant déterminé selon le procédé décrit dans la description, et

la feuille de mousse de résine de polyester thermoplastique présente un temps de cristallisation de 14 minutes ou moins, tel que mesuré par un procédé comprenant les étapes consistant à :

soumettre un échantillon prélevé sur la feuille de mousse de résine de polyester thermoplastique à un premier chauffage en chauffant l'échantillon de 30 °C à 290 °C à une vitesse de chauffage de 100 °C/min en utilisant un appareil de calorimétrie à balayage différentiel de flux thermique (DSC), suivi du maintien de l'échantillon à 290 °C pendant 10 minutes ;

retirer l'échantillon de l'appareil pour permettre à l'échantillon de rester au repos à 23 °C pendant 10 minutes, suivi du retour de l'échantillon à l'intérieur de l'appareil présentant une température de 30 °C ;

soumettre l'échantillon résultant à un second chauffage en chauffant l'échantillon de 30 °C à 110 °C à une vitesse de chauffage de 100°C/min, suivi du maintien de l'échantillon à 110 °C pendant 30 minutes ; et

déterminer un temps de cristallisation à partir d'une courbe DSC obtenue lors du second chauffage en termes de temps entre le début du second chauffage et un temps d'émergence d'un sommet de pic d'un dernier pic exothermique apparaissant sur la courbe DSC.

2. Feuille de mousse de résine de polyester thermoplastique selon la revendication 1, dans laquelle l'accélérateur de cristallisation comprend au moins l'un parmi un talc, un noir de carbone et les oxydes métalliques.

3. Feuille de mousse de résine de polyester thermoplastique selon la revendication 1 ou 2, dans laquelle la quantité d'accélérateur de cristallisation est de 0,05 partie en masse ou plus et de 5 parties en masse ou moins par rapport à 100 parties en masse de la résine de polyester thermoplastique.

4. Utilisation de la feuille de mousse de résine de polyester thermoplastique selon l'une quelconque des revendications 1 à 3 pour produire des contenants d'emballage alimentaire.

5. Contenant en mousse de résine de polyester thermoplastique comprenant :

une résine de polyester thermoplastique ; et

au moins un accélérateur de cristallisation sélectionné parmi un accélérateur inorganique de cristallisation et un accélérateur organique de cristallisation,

dans lequel l'accélérateur de cristallisation est particulaire,

un axe principal de l'accélérateur de cristallisation dans la feuille de mousse de résine de polyester thermoplastique est de 0,05 $\mu$m ou plus et de 50 $\mu$m ou moins,

un rapport d'abondance de molécules présentant un poids moléculaire de 10 000 ou moins tel que déterminé à partir d'une répartition de poids moléculaire différentielle de la résine de polyester thermoplastique est de 6,0 % en masse ou moins, sur la base d'une masse totale de la résine de polyester thermoplastique, le poids moléculaire étant déterminé selon le procédé décrit dans la description, et

le contenant en mousse de résine de polyester thermoplastique présente un temps de cristallisation de 14 minutes ou moins, tel que mesuré par un procédé comprenant les étapes consistant à :

soumettre un échantillon prélevé sur le contenant en mousse de résine de polyester thermoplastique à un premier chauffage en chauffant l'échantillon de 30 °C à 290 °C à une vitesse de chauffage de 100 °C/min en utilisant un appareil de calorimétrie à balayage différentiel de flux thermique (DSC), suivi du maintien de l'échantillon à 290 °C pendant 10 minutes ;

retirer l'échantillon de l'appareil pour permettre à l'échantillon de rester au repos à 23 °C pendant 10 minutes, suivi du retour de l'échantillon à l'intérieur de l'appareil présentant une température de 30 °C ;

soumettre l'échantillon résultant à un second chauffage en chauffant l'échantillon de 30 °C à 110 °C à une vitesse de chauffage de 100°C/min, suivi du maintien de l'échantillon à 110 °C pendant 30 minutes ; et déterminer un temps de cristallisation à partir d'une courbe DSC obtenue lors du second chauffage en termes de temps entre le début du second chauffage et un temps d'émergence d'un sommet de pic d'un dernier pic exothermique apparaissant sur la courbe DSC.

6. Contenant en mousse de résine de polyester thermoplastique selon la revendication 5, dans lequel l'accélérateur de cristallisation comprend au moins l'un parmi un talc, un noir de carbone et les oxydes métalliques.

7. Contenant en mousse de résine de polyester thermoplastique selon la revendication 5 ou 6, dans lequel une quantité d'accélérateur de cristallisation est de 0,05 partie en masse ou plus et de 5 parties en masse ou moins par rapport à 100 parties en masse de la résine de polyester thermoplastique.

8. Contenant en mousse de résine de polyester thermoplastique selon l'une quelconque des revendications 5 à 7, qui est un contenant d'emballage alimentaire.

9. Contenant en mousse de résine de polyester thermoplastique selon la revendication 8, qui est un contenant transparent aux micro-ondes pour chauffer les aliments surgelés.

FIG. 1

**EP 3 549 976 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3239527 A
- JP 2015098587 A
- JP H11116722 A
- JP 2014047228 A
- JP 2000001559 A
- JP 2000037805 A